**Europäisches Patentamt**

**European Patent Office**

**Office européen des brevets**

(11) Veröffentlichungsnummer: **0 086 491**
**A2**

(12) # EUROPÄISCHE PATENTANMELDUNG

(21) Anmeldenummer: **83101430.3**

(51) Int. Cl.³: **E 05 B 49/00**

(22) Anmeldetag: **15.02.83**

(30) Priorität: **17.02.82 DE 3205586**

(43) Veröffentlichungstag der Anmeldung: **24.08.83**
Patentblatt **83/34**

(84) Benannte Vertragsstaaten: **DE FR GB IT**

(71) Anmelder: **DODUCO KG. Dr. Eugen Dürrwächter, Im Altgefäll 12, D-7530 Pforzheim (DE)**

(72) Erfinder: **Gross, Erwin, Rintheimer Strasse 19, D-7500 Karlsruhe 1 (DE)**
Erfinder: **Kuers, Günter, Dr., Schwarzwaldstrasse 22, D-7530 Pforzheim (DE)**
Erfinder: **Vester, Klaus, Panoramastrasse 32, D-7534 Birkenfeld 1 (DE)**

(74) Vertreter: **Twelmeier, Ulrich, Dipl.Phys. et al, Patentanwälte Dr. Rudolf Bauer Dipl.-Ing.Helmut Hubbuch, Dipl.Phys. Ulrich Twelmeier Westliche Karl-Friedrich-Strasse 29-31, D-7530 Pforzheim (DE)**

(54) **Elektromechanische Schliesseinrichtung.**

(57) Es wird eine elektromechanische Schließeinrichtung mit einem magnetomechanischen Schlüssel beschrieben, welcher parallel zueinander ausgerichtete, geradlinige, magnetisch bistabile Drahtabschnitte (8) trägt, und mit einer im Schloß vorgesehenen elektromagnetischen auf magnetisch bistabile Drahtabschnitte ansprechenden Erkennungseinrichtung (13), an deren Lesekopf (12) die Drahtabschnitte (8) durch Betätigung des Schlüssels vorbeibewegbar sind, wobei der Schlüssel einen rotationssymmetrischen Hals (2) besitzt, auf welchem die Drahtabschnitte (8) parallel zu der in Einsteckrichtung des Schlüssels verlaufenden Symmetrieachse verlaufend kranzförmig am Umfang verteilt angeordnet sind, wobei der Schlüssel einen der mechanischen Betätigung eines Schließorgans (16) dienenden Bart (3) aufweist.

- 1 -

## Elektromechanische Schließeinrichtung

Die Erfindung geht aus von einer elektromechanischen Schließeinrichtung mit den im Oberbegriff des Anspruchs 1 angegebenen Merkmalen. Bei einer solchen bekannten Schließeinrichtung dient als Schlüssel ein flacher, steifer Kunststoffstreifen, in welchen eine Folge von magnetisch bistabilen Drahtabschnitten unverlierbar eingeschweißt ist.
Die Drahtabschnitte liegen im Streifen parallel zueinander und quer zur Längsrichtung des Streifens und damit auch quer zur Einsteckrichtung des Streifens. Durch die Anordnung und Abfolge der Drahtabschnitte im Streifen ist dieser mit einer Information codiert, welche von einer elektromagnetischen Erkennungseinrichtung ausgewertet werden kann. Dies geschieht in der Weise, daß der Schlüssel beim Einstecken in das Schloß mit seinen eingeschweißten Drahtabschnitten an einem Lesekopf der Erkennungseinrichtung vorübergeführt wird. Der Lesekopf spricht induktiv auf die einzelnen Drahtabschnitte an und erzeugt während des Einsteckens des Schlüssels eine Folge elektrischer Impulse in Abhängigkeit von der Abfolge der Drahtabschnitte im Schlüssel. Diese Impulsfolge wird von der Erkennungseinrichtung mit einer vorgegebenen Impulsfolge verglichen. Bei fehlender Übereinstimmung entscheidet die Erkennungseinrichtung auf "Schlüssel paßt nicht" und die Schließeinrichtung bleibt verriegelt; bei Übereinstimmung der durch das Einstecken des Schlüssels signalisierten Impulsfolge

- 2 -

mit der vorgegebenen Impulsfolge entscheidet die
Erkennungseinrichtung auf "Schlüssel paßt" und entriegelt gleichzeitig die Schließeinrichtung.

Als magnetisch bistabile Drahtabschnitte eignen
sich vor allem Wiegand-Drähte. Wiegand-Drähte sind in
ihrer Zusammensetzung homogene, ferromagnetische
Drähte (z.B. aus einer Legierung von Eisen und Nickel,
vorzugsweise 48 % Eisen und 52 % Nickel, oder aus
einer Legierung von Eisen und Kobalt, oder aus einer
Legierung von Eisen mit Kobalt und Nickel, oder aus
einer Legierung von Kobalt mit Eisen und Vanadium,
vorzugsweise 52 % Kobalt, 38 % Eisen und 10 % Vanadium),
die infolge einer besonderen mechanischen und thermischen
Behandlung einen weichmagnetischen Kern und einen
hartmagnetischen Mantel besitzen, d.h. der Mantel
besitzt eine höhere Koerzitivkraft als der Kern. Aufbau und Herstellung von Wiegand-Drähten sind in der
DE-OS 21 43 326 beschrieben. Die Drähte werden im Verlauf des Herstellungsverfahrens verdreht und erhalten
dadurch eine charakteristische, wendelförmige Textur,
die sich auch in einem wendelförmigen Verlauf der
Magnetisierung äußert. Wiegand-Drähte haben typisch
eine Länge von 5 bis 50 mm, vorzugsweise von 20 bis
30 mm. Bringt man einen Wiegand-Draht, bei dem die
Magnetisierungsrichtung des weichmagnetischen Kerns
mit der Magnetisierungsrichtung des hartmagnetischen
Mantels übereinstimmt, in ein äußeres Magnetfeld,
dessen Richtung mit der Richtung der Drahtachse übereinstimmt, der Magnetisierungsrichtung des Wiegand-
Drahtes aber entgegengesetzt ist, dann wird bei
Überschreiten einer Feldstärke von ca. 16 A/cm die

- 3 -

Magnetisierungsrichtung des weichen Kerns des Wiegand-Drahtes umgekehrt. Diese Umkehrung wird auch als Rückstellung bezeichnet. Bei erneuter Richtungsumkehr des äußeren Magnetfeldes kehrt sich die Magnetisierungsrichtung des Kerns bei Überschreiten einer kritischen Feldstärke des äußeren Magnetfeldes erneut um, so daß der Kern und der Mantel wieder parallel magnetisiert sind. Diese Umkehrung der Magnetisierungsrichtung erfolgt sehr rasch und geht mit einer entsprechend starken Änderung des magnetischen Kraftflusses pro Zeiteinheit einher (Wiegand-Effekt). Diese Änderung des Kraftflusses kann in einer Induktionsspule einen kurzen und sehr hohen (je nach Windungszahl und Belastungswiderstand der Induktionsspule bis ca. 12 Volt) Spannungsimpuls induzieren.

Auch beim Zurückstellen des Kerns wird ein Impuls in einer Induktionsspule erzeugt, allerdings mit wesentlich geringerer Amplitude und umgekehrtem Vorzeichen als im Falle des Umklappens von der antiparallelen in die parallele Magnetisierungsrichtung.

Wählt man als äußeres Magnetfeld ein Wechselfeld, welches in der Lage ist, zuerst den Kern und danach auch den Mantel umzumagnetisieren und jeweils bis in die magnetische Sättigung zu bringen, so treten Wiegand-Impulse infolge des Umklappens der Magnetisierungsrichtung des weichmagnetischen Kerns abwechselnd mit positiver und negativer Polarität auf und man

- 4 -

spricht von symmetrischer Erregung des Wiegand-
Drahtes. Dazu benötigt man Feldstärken von ca.
-(80 bis 120 A/cm) bis +(80 bis 120A/cm). Das
Ummagnetisieren des Mantels erfolgt ebenfalls sprunghaft und führt ebenfalls zu einem Impuls in der
Induktionsspule, jedoch ist der Impuls wesentlich
kleiner als der beim Umklappen des Kerns induzierte
Impuls und wird zumeist nicht ausgewertet.

Wählt man jedoch als äußeres Magnetfeld ein solches,
welches nur in der Lage ist, den weichen Kern, nicht
aber den harten Mantel in seiner Magnetisierungsrichtung umzukehren, dann treten die hohen Wiegand-Impulse nur mit gleichbleibender Polarität auf und man
spricht von asymmetrischer Erregung des Wiegand-
Drahtes. Dazu benötigt man in der einen Richtung
eine Feldstärke von wenigstens 16 A/cm (für die Rückstellung des Wiegand-Drahtes) und in der umgekehrten
Richtung eine Feldstärke von ca. 80 bis 120 A/cm.

Charakteristisch für den Wiegand-Effekt ist, daß die
durch ihn erzeugten Impulse in Amplitude und Breite
weitgehend unabhängig sind von der Änderungsgeschwindigkeit des äußeren Magnetfeldes und ein hohes
Signal-zu-Rausch-Verhältnis aufweisen.

Die bekannte Schließeinrichtung hat den Nachteil, daß
der flache Schlüssel selbst nicht zur mechanischen
Betätigung eines Schließorgans verwendet werden kann.

- 5 -

Der Schlüssel dient vielmehr lediglich als Informationsträger. Er kann nicht, wie man das bei einem mechanischen Schlüssel gewohnt ist, zur Entriegelung der Schließeinrichtung gedreht werden, weil der Lesekopf, an welchem er dicht entlanggeführt werden muß, einer Drehung im Wege steht.

Der Erfindung liegt die Aufgabe zugrunde, eine Schließeinrichtung der eingangs genannten Art dergestalt weiterzubilden, daß der Schlüssel nicht nur als Informationsträger dient, sondern zugleich auch zum mechanischen Betätigen eines Schließorgans verwendet werden kann.

Die Aufgabe ist erfindungsgemäß gelöst durch eine Schließeinrichtung mit den im Anspruch 1 angegebenen Merkmalen. Vorteilhafte Weiterbildungen der Erfindung sind Gegenstand der Unteransprüche.

Bei der erfindungsgemäßen Schließeinrichtung ist die Anordnung der Drahtabschnitte auf einem rotationssymmetrischen, insbesondere zylindrischen Schlüsselhals so gewählt, daß der Lesekopf nicht schon beim Einstecken, sondern erst nach erfolgtem Einstecken des Schlüssels bis an einen Anschlag bei nachfolgender Drehung des Schlüssels auf die Drahtabschnitte anspricht. Die Drahtabschnitte werden durch Drehung des Schlüssels dicht am Lesekopf vorbeigeführt.

- 6 -

Der Lesekopf enthält eine Anordnung von Magneten, welche die magnetisch bistabilen Drähte zu einer plötzlichen Änderung ihres Magnetisierungszustandes veranlassen, wenn sie am Lesekopf vorbeigeführt werden. Die mit der plötzlichen Änderung des Magnetisierungszustandes einhergehende Änderung des magnetischen Kraftflusses induziert in einer elektrischen Spule einen elektrischen Impuls, welcher an die Erkennungseinrichtung weitergeleitet wird. Anordnung und Aufbau solcher Leseköpfe sind Stand der Technik. Es sei in diesem Zusammenhang auf die Druckschrift DE-OS 21 43 326 und Zeitschrift "ELECTRONICS" vom 10. Juli 1975, S. 100-105 verwiesen.

Durch das Drehen des Schlüssels im Schloß wird auf diese Weise eine Impulsfolge erzeugt, welche den ausgelesenen Informationsgehalt des Schlüssels darstellt und in der Erkennungseinrichtung in der eingangs erläuterten Weise mit einer vorgegebenen Impulsfolge verglichen wird.

Der Schlüsselbart des erfindungsgemäßen Schlüssels besitzt - anders als ein herkömmlicher mechanischer Schlüssel - keine Dekodierfunktion, sondern dient allein der mechanischen Betätigung eines Schließorgans, z.B. eines Riegels oder eines auf einen Riegel einwirkenden Kupplungsteils, welches jedoch von der Schließeinrichtung erst dann zur Betätigung freigegeben wird, wenn die Erkennungseinrichtung gemeldet hat, daß der eingesteckte und ungedrehte Schlüssel "paßt". Solange die Erkennungseinrichtung den einge-

- 7 -

steckten Schlüssel nicht als passend erkannt hat,
kann der Schlüssel im Schloß frei gedreht werden,
ohne es zu entriegeln. Hat jedoch die Erkennungseinrichtung den Schlüssel nach wenigstens einer vollen
Umdrehung als passend erkannt, so bewirkt sie, daß
in den vom Schlüsselbart beim Drehen des Schlüssels
im Schloß überstrichenen Weg ein Mitnehmer plaziert
wird, auf welchen der Schlüsselbart bei weiterer
Drehung einwirkt und dadurch das Schloß mechanisch
entriegelt.

Um die auf dem Schlüsselhals in kodierter Form vorhandene Information vollständig lesen zu können, ist
es nötig, mit dem Schlüssel im Schloß eine vollständige Umdrehung zu vollführen, damit vom Lesekopf
der ganze Umfang des Schlüsselhalses abgetastet werden kann. Um den Beginn der Umdrehung in vorbestimmter
Lage des Schlüsselhalses relativ zum Lesekopf beginnen zu können, ist gemäß Anspruch 3 zweckmäßigerweise vorgesehen, daß der Schlüssel nur in einer durch
die Lage des Bartes bestimmten Stellung in das Schloß
eingeführt werden kann, z.B. dergestalt, daß im
Schloß eine Führungsnut für den Bart vorgesehen ist,
welche so tief in das Schloß hineinführt, daß sie den
Bart erst dann freigibt, wenn der Schlüssel bis zum
Anschlag in das Schloß eingeführt ist und der Kranz
der Drahtabschnitte dem Lesekopf gegenüberliegt. Auf
diese Weise ist der Beginn der beim Auslesen des
Schlüssels auftretenden Impulsfolge festgelegt.

- 8 -

Am Schlüsselhals ist wenigstens ein Kranz von Drahtabschnitten vorgesehen. Die Kodierung des Schlüssels
kann aber mit Vorteil noch umfangreicher gestaltet
und die Zahl der möglichen Schlüsselkombinationen
stark erhöht werden, wenn man weitere Kränze von
Drahtabschnitten auf dem Schlüsselhals vorsieht (Anspruch 4). Zweckmäßig ordnet man jedem der Kränze im
Schloß einen gesonderten Lesekopf zu.

Die Drahtabschnitte sollten am Schlüsselhals möglichst
geschützt untergebracht werden. Gemäß Anspruch 5
werden die Drahtabschnitte daher vorzugsweise in
achsparallelen Nuten des Schlüsselhalses untergebracht, welche zweckmäßig äquidistant über den Umfang des Schlüsselhalses verteilt sind. Als Werkstoff
für den Schlüssel, insbesondere den Schlüsselhals,
kann ein harter Kunststoff verwendet werden, aber auch
ein nichtmagnetisches Metall wie z.B. Aluminium.

Die Kodierung des Schlüssels kann man dadurch bewirken, daß man an besonders ausgewählten Stellen des
Schlüsselhalses Nuten vorsieht und in jede Nut einen
magnetisch bistabilen Drahtabschnitt einlegt. Vorteilhafter ist es jedoch, die Nuten äquidistant über
den Umfang des Schlüsselhalses zu verteilen und die
magnetisch bistabilen Drahtabschnitte in ausgewählte
Nuten einzubetten (Anspruch 7). Die verbleibenden
Nuten können leer bleiben, werden vorzugsweise aber
mit Drahtabschnitten belegt, welche nicht magnetisch

- 9 -

bistabil sind und auf welche die Leseköpfe der Erkennungseinrichtung deshalb nicht ansprechen; vorzugsweise bestehen die magnetisch nicht bistabilen Drahtabschnitte aus demselben Werkstoff wie die bistabilen Drahtabschnitte, um das Entschlüsseln der am Schlüsselhals kodierten Information durch unbefugte Personen zu erschweren (Anspruch 8).

Aus demselben Grund wird auch bevorzugt, die Drahtabschnitte in den Nuten in eine undurchsichtige, nicht magnetische Masse einzubetten, insbesondere in Kunststoff einzugießen (Anspruch 9) und/oder die Drahtabschnitte durch eine den Schlüsselhals umgebende Hülse zu verdecken, welche durch Verkleben, Verschweissen oder Verlöten so gesichert wird, daß sie nur durch Zerstörung des Schlüssels entfernbar ist (Anspruch 10). Die Hülse soll ebenfalls aus nichtmagnetischem Material bestehen. Sie soll ferner eine möglichst geringe elektrische Leitfähigkeit besitzen. Bei zu hoher elektrischer Leitfähigkeit würde die Hülse verhindern, daß in der Wicklung des Lesekopfes bei Ummagnetisierung der Drahtabschnitte eine meßbare Spannung induziert wird.

Die beigefügten schematischen Zeichnungen zeigen ein bevorzugtes Ausführungsbeispiel der Erfindung.

Figur 1 zeigt einen Schlüssel in der Seitenansicht mit teilweise weggebrochener Hülse,

- 10 -

Figur 2 zeigt den Querschnitt II-II durch den Schlüssel aus Fig. 1 in vergrößertem Maßstab,

Figur 3 zeigt perspektivisch den Schließzylinder eines Schlosses, zu welchem der Schlüssel der Fig. 1 paßt, und

Figur 4 zeigt den Querschnitt durch den Schließzylinder im Bereich seines Schließorgans.

Der Schlüssel besteht aus einem Griff 1, einem Hals 2, und aus einem Bart 3 am Ende des Halses 2. Der Schlüssel besteht aus Aluminium und trägt auf seinem Hals eine Hülse 4 aus einer elektrischen/Widerstandslegierung. Unter der Hülse 4 ist der Hals 2 mit zwei Kränzen 5 von äquidistanten, zur Symmetrieachse 7 des Halses 2 parallelen Nuten 6 versehen. Lediglich in der Flucht des Bartes 3 sind keine Nuten vorgesehen. In den Nuten 6 befindet sich in Kunstharz 9 eingegossen je ein Drahtabschnitt 8. Bei den Drahtabschnitten 8 handelt es sich teils um magnetisch bistabile Wiegand-Drähte und teils um nicht bistabile Drahtabschnitte aus demselben Material wie die Wiegand-Drähte, welche gemäß dem vorgegebenen Code in den beiden Nutenkränzen 5 verteilt sind.

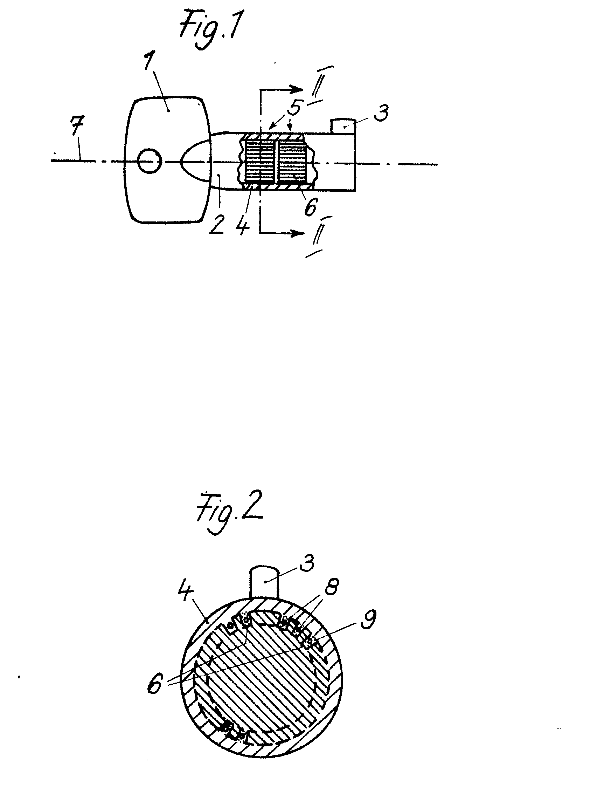

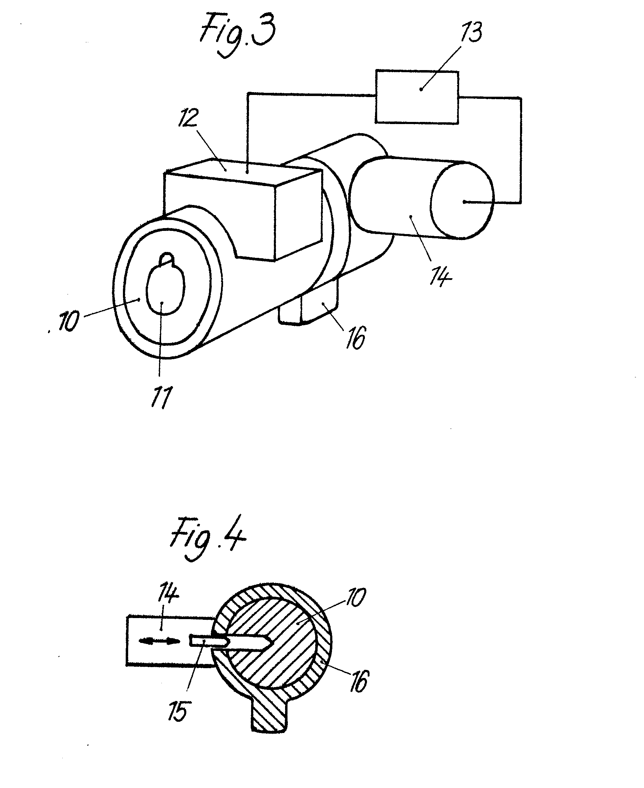

Der in Fig. 1 und 2 dargestellte Schlüssel paßt zu einem Zylinderschloß (Fig. 3), dessen Zylinder 10 in üblicher Weise ein der Kontur des Schlüssels angepaßtes Schlüsselloch 11 aufweist.In den Schließzylinder 10 greift von außen ein elektromagnetischer
Lesekopf 12 ein, welcher auf die bei einer Zylinderdrehung mit eingeführtem Schlüssel an ihm vorbeibewegten Wiegand-Drähte 8 anspricht und auf jeden
vorbeibewegten Wiegand-Draht 8 mit der Abgabe eines
elektrischen Impulses reagiert. Die bei einer vollen
Umdrehung des Schlüssels erzeugte Impulsfolge wird in
einer Erkennungseinrichtung 13 mit einer vorgegebenen
Impulsfolge verglichen. Stimmen beide Impulsfolgen
überein, dann erkennt die Erkennungseinrichtung 13 den
Schlüssel als zum Schloß passend und gibt ein Auslösesignal an eine elektromagnetische Betätigungseinrichtung 14 ab, welches bewirkt, daß ein Mitnehmerstift 15 den Zylinder 10 drehschlüssig mit einem den
Zylinder 10
umgebenden Schließorgan 16 koppelt, mit welchem das
Schloß schließlich mechanisch, nämlich durch Zylinderdrehung mittels des Schlüssels entriegelbar ist.

Die elektrische Stromversorgung der Schließeinrichtung ist nicht dargestellt.

Die erfindungsgemäße Schließeinrichtung verbindet
ein hohes Maß an Sicherheit gegen unbefugtes
Öffnen mit der von mechanischen Schlössern her
gewohnten Handhabung mittels eines Schlüssels
von äußerlich gewöhnlicher Gestalt.

- 12 -

Patentansprüche:

1.  Elektromechanische Schließeinrichtung mit einem magnetomechanischen Schlüssel, welcher parallel zueinander ausgerichtete, geradlinige, magnetisch bistabile Drahtabschnitte trägt, und mit einer im Schloß vorgesehenen elektromagnetischen, auf magnetisch bistabile Drahtabschnitte ansprechenden Erkennungseinrichtung, an deren Lesekopf die Drahtabschnitte durch Betätigen des Schlüssels vorbei bewegbar sind, dadurch gekennzeichnet, daß der Schlüssel einen rotationssymmetrischen Hals (2) besitzt, auf welchem die Drahtabschnitte (8) parallel zu der in Einsteckrichtung des Schlüssels verlaufenden Symmetrieachse (7) verlaufend kranzförmig am Umfang verteilt angeordnet sind, und daß der Schlüssel einen der mechanischen Betätigung eines Schließorgans (16) dienenden Bart (3) aufweist.

2.  Schließeinrichtung nach Anspruch 1, dadurch gekennzeichnet, daß die mechanische Verbindung zwischen dem Schließorgan (16) und dem Bart (3) unterbrochen ist, solange die Erkennungseinrichtung (13) den Schlüssel nicht als "passend" erkannt hat.

3.  Schließeinrichtung nach Anspruch 1 oder 2, dadurch gekennzeichnet, daß der Schlüssel nur in einer durch die Lage des Bartes (3) bestimmten Orientierung in das Schloß (Fig. 3) einführbar ist.

- 13 -

4. Schlüssel für eine Schließeinrichtung nach Anspruch 1, 2 oder 3, dadurch gekennzeichnet, daß am Schlüsselhals (2) zwei oder mehr in Richtung der Symmetrieachse (7) hintereinander angeordnete Gruppen (5) von kranzförmig angeordneten Drahtabschnitten (8) vorgesehen sind,

5. Schlüssel für eine Schließeinrichtung nach einem der Ansprüche 1 bis 4,dadurch gekennzeichnet, daß die Drahtabschnitte (8) in achsparallelen Nuten (6) des Schlüsselhalses (2) liegen.

6. Schlüssel nach Anspruch 5, dadurch gekennzeichnet, daß die Nuten (6) in Umfangsrichtung äquidistant angeordnet sind.

7. Schlüssel nach Anspruch 5 oder 6, dadurch gekennzeichnet, daß nur in einer Teilmenge der Nuten (6) magnetisch bistabile Drahtabschnitte (8) liegen.

8. Schlüssel nach Anspruch 5 oder 6, dadurch gekennzeichnet, daß in jeder Nut (6) ein Drahtabschnitt (8) liegt, daß jedoch nur eine Teilmenge der Drahtabschnitte (8) magnetisch bistabil ist.

9. Schlüssel nach einem der Ansprüche 5 bis 8, dadurch gekennzeichnet, daß die Drahtabschnitte (8) in den Nuten (6) in eine undurchsichtige,
nicht magnetische Masse eingebettet, insbesondere
eingegossen sind.

10. Schlüssel nach einem der Ansprüche 5 bis 9,
    dadurch gekennzeichnet, daß auf dem Schlüsselhals (2) eine die Drahtabschnitte (8) verdeckende,
nichtmagnetische, nur durch Zerstörung des Schlüssels
entfernbare Hülse (4) vorgesehen ist.

0086491

1/2

Fig.1

Fig.2

Fig.3

Fig.4